# EUROPEAN PATENT APPLICATION

(11) **EP 1 227 281 A1**
(43) Date of publication of application: **31.07.2002**
(21) Application number: 01300794.3
(22) Date of filing: 30.01.2001
(51) Int. Cl.: F24D 3/16

(54) **Heat transfer tile**

(71) Applicant: Hydroclima Ltd., West Kingsdown, Kent TN15 6AR (GB)
(72) Inventor: Kennedy, Philip Andrew, Hinckley LE10, Leicestershire (GB)
(74) Representative: Lamb, Martin John Carstairs

(57) **Abstract**

In order to provide a heat transfer tile (1) of improved efficiency for heating or cooling a room, the tile comprises a heat exchange element comprising a channelled member (8) comprising a first plate (9) and a second plate (10) bonded to the first plate (9) wherein at least the second plate (10) is shaped. whereby the configuration of the shaped plate provides an elongate channel (18) between the plates (9, 10) allowing a passage of energy transfer fluid through the tile, characterised in that the first plate comprise a surface for facing into the room. This surface is in heat exchange relationship with the room, providing improved heat transfer between the room and the tile.

## Description

This invention relates to a heat transfer tile for use in indoor heating or cooling duties. It is especially concerned with the heating or cooling of rooms in domestic or business premises.

The efficiency of room heating and cooling systems is a matter of increasing concern in order to minimise the energy they consume. Systems which circulate heated or cooling air are commonly employed but air has a low thermal capacity such that a relatively large volume is required, necessitating relatively large air ducts. The large volumes of air may also create an unacceptable level of noise from vents through which it is supplied. Air heating and cooling relies mainly on good convection and some conduction but derives little or no input from radiation. Radiators receiving hot water from a central boiler are the other main system in current use for heating purposes. These rely largely on radiation into the room, with some conduction to the room air and some convection of it. They are generally effective but have the disadvantages of occupying much of the available wall space in the room and of taking some time to warm up the room from cold. Moreover the traditional types of room radiator are not well suited to cooling duties.

Interest has therefore been growing in the use of heat transfer tiles in room ceilings and walls for one or both of heating and cooling. Tiles have the advantages of providing radiant heating or cooling across a wide surface area without intruding into the useable room space. One previous type of tile comprises a flat metal plate facing the room space with copper tubing attached to the rear surface of the plate. Cooled or heated water is circulated through the copper tubing and heat is transferred to or from it through the metal plate to the room space.

The previous plate/tubing configuration has presented problems in achieving high levels of efficiency in heat transfer between the room and the circulating water. Direct contact between the tubing and plate occurs over only a small portion of the tube circumference. The direct contact can be improved by fins or flanges on the tubing but these significantly increase the cost and complexity of the tile.

British patent application no. 0003264.9, filed on the 11 February 2000, discloses a heat transfer tile for cooling or heating a room, which tile comprises a flat facing sheet, a heat exchange element and an insulation board, wherein the heat exchange element is a channelled member comprising a first plate adjacent to the facing sheet and shaped plate welded or fused to the flat plate, wherein the configuration of the shaped plate provides an elongate channel between the plates for passage of an energy transfer fluid through the tile. Preferably, the energy transfer fluid is water. Preferably, it is chilled water.

The presence of a facing sheet has been found to give rise to problems of heat transfer. It also leads to complexity in manufacture. It has been believed in the art that the heat exchange element itself does not have a sufficiently aesthetic appearance to be used as the lower face of the heat transfer tile which is visible from the room. The present inventor has discovered that the heat exchange element can have a sufficient aesthetic finish to be used as the bottom surface of the heat transfer tile which faces into the room.

Accordingly, the present invention provides a heat transfer tile for heating or cooling a room, which tile comprises a heat exchange element comprising a channel member comprising a first plate and a second plate fused to the first plate, wherein at least the second plate is shaped, whereby the configuration of the shaped plates provides an elongate channel between the plates for passage of an energy transfer fluid through the tile, characterised in that the first plate comprises a surface for facing into the room. According to the invention, the first surface of the heat transfer tile directly faces into the room without any intermediate flat facing sheet. In effect, the first surface will, in use, be in radiative heat transfer relationship with the room.

Tiles according to the invention offer the advantage of excellent heat contact between the channel conveying the energy transfer fluid and the room. The configuration of the heat exchange element makes for easy construction of the element and the required elongated channel. By appropriate selection of the shape of the elongated channel the energy transfer fluid can be brought into direct contact with a very high proportion of the element surface in contact with the facing sheet. The shaped plate also allows for much greater flexibility in the fluid flow path than can be provided by the conventional copper tubing.

The tiles of the invention are especially well suited to use as ceiling tiles for cooling duties. It is however emphasised that the tiles are also well suited to use on wall or floor surfaces and to use as heating panels. Used in association with a heat pump or similar device they can be used for both heating and cooling, thereby simplifying a room's heating and cooling infrastructure.

The heat exchange element suitable for use in such a tile is distinguished from the heat exchange elements used in British patent application 0003264.9 by having a surface for facing in to the room, which has an acceptable aesthetic finish. It further distinguished in that it either forms the entire lower surface of the tile for facing into the room or a part thereof. Where the heat exchange element forms only a part of the surface of the tile for facing into the room, the remainder is preferably formed by a tile frame. For many purposes the energy transfer fluid is simply water, either heated or chilled, and possibly containing anti-freeze and corrosion inhibitors. Alternatively it may be a refrigerant fluid such as CFC-free refrigerants.

The tile may be used as part of a wall or ceiling of the room. The tiles are intended to be employed in a conventional framework for a room ceiling or wall, with associated pipe-work to carry heating or cooling fluid to and from the tiles being located behind the tiles. Each tile includes at least two connector, one at each end of the channel, to connect it to the pipe-work. Depending upon the configuration of the room and of the framework the heating or cooling means associated with the tiles may be located in a space behind the tiles or located remote from the tiles, for example outside the room.

The surface for facing into the room may have a decorative coating, for example of paint. It may have acoustic treatment to reduce sound reflection. Preferably, the heat exchange element is formed at its edges with suitable configurations for connecting to suspending means of known design. For example, it may be configured to engage with conventional suspending means for false ceiling systems

The channelled member can be formed by the following procedure from two thin flat metal plates. Non-bonding ink, for example a titanium-based ink, is applied to one or both of the plates, for example by silk screen printing, in the pattern required for the fluid channel. The plates are brought together as a sandwich with the ink between them. The sandwich is subjected to sufficient heat and pressure to cause the plates to fuse or weld together, except in the area of the applied ink pattern where fusing is prevented by the presence of the ink. The so-fused sandwich is placed between two surfaces. At least one surface is a firm but resilient cover and the other surface is either a firm but resilient cover or a solid surface. Compressed air is fed into one end of the pattern area. The resilient cover or covers permit inflation of the plate into the required channel shape under the action of the compressed air. If there is a solid surface, no inflation occurs at the surface of the sandwich in contact with that surface, so that a flat face can be obtained.

The material forming the plates of the heat exchange element could be plastic but is preferably metal, such as steel or copper, but most preferably it is aluminium.

The thickness of the heat exchanger is preferably in the range 1.0 to 50 mm. The thickness of the plates forming the heat exchanger is preferably in the range of 0.4 mm to 5.0 mm.

The choice of shape and dimensions of the elongated channel provided by the channel within the heat exchange element is made in advance of formation of the element and is achieved according to the construction procedure described above. The choice is also affected by the nature of the fluid to be passed through the channel and the need to achieve good heat exchange while it is passing through the channel. The objective is to provide an energy efficient, easy flow pattern. Good heat exchange requires a significant volume flow rate cross a high proportion of the surface area of the tile, while at the same time requiring a relatively slow flow past any given point . A relatively wide flow path is therefore desirable.

The configuration of the elongated channel is determined by the pattern in which the plates of the heat exchange element are bonded to each other. In one embodiment of the invention the elongated channel includes a plurality of individual paths across the width of the tile, supplied from a common feed channel at one side of the tile and drained by a common outlet channel at the other side of the tile. In a further embodiment the channel is in the form of a continuous sinuous path. In another embodiment the plates are bonded in a patch pattern, providing multiple paths around the bonded patches.

The configuration of the supply and return tail pipes for the tile should also be chosen to provide an energy efficient, easy flow pattern. These can be angled from the channel to allow for ease of connection to the pipe-work behind the tile.

In one embodiment of the invention intended for tiles used with refrigerant fluid, the channel includes a portion of narrow cross section and a portion of wider cross section. For cooling duties, refrigerant is supplied as liquid to the small cross section portion, expands, evaporates and cools as it passes into the wider section and flows as a cooling vapour stream through the remainder of the wider section. For heating duties the fluid is supplied to the wider section as warm vapour, cools as it passes through the wider section and into the narrow section, condenses and leaves the channel as liquid.

The heat exchange element may be profiled to improve the acoustic properties of the tile . The heat exchange element may include perforations, again with a view to improving the acoustic properties of the tile. The perforations must necessarily be through portions of the element other than between the elongated channel for fluid. The perforations may be small (of the order of 0.1-1.5 mm) and may be filled with a material, such as paint, which improves the aesthetic appearance without affecting sound absorption.

The tile may include thermal insulation material. The insulation material may be in the form of a board. The insulation material is preferably located on a face opposite to the face that faces into the room.

The insulation is preferably formed from mineral fibre. In general it preferably has a thickness in the range of 10 - 20mm, preferably with a density in the region of 400 to 500 kg/m³.

It is preferably held in place by mechanical means, for example by metal tabs rather than by an adhesive. The objective here is to provide good acoustic and insulation properties for the complete tile.

The tile may comprise suitable means to allow it to be suspended or mounted facing into a room. For example, it may have means for engaging a suspended ceiling support system. Where the heat exchange element defines substantially the whole area of the tile facing into the room, suspending means may be formed on the back of the heat exchange element. They may be formed by deforming the heat exchange element, for example bending up at least one side of the heat exchange element. Where the tile includes a tile frame, the tile frame may include means for engaging with support means.

Tiles according to the invention can either be used as the sole source of heating and cooling in a room, or if desired to supplement other heating and cooling systems.

Compared with previously proposed heat transfer tiles for use in rooms the tiles of the invention provide a substantial increase in performance. This is achieved by a high level of contact between the energy transfer fluid and the heat exchange material, which can provide a 30% increase in performance over a tube/plate heat exchanger maybe even a 50% improvement.

The invention is further illustrated by way of example only with reference to the accompanying drawings, in which:
Figure 1 is a plan view of part of a room ceiling fitted with heat transfer tiles according to the invention, showing the framework in which they are held and the means for supply and return of the energy transfer fluid.
Figure 2 is a plan view of a heat transfer tile according to the present invention.
Figure 3 is a part cross section through figure 2 along line III-III
Figures 4,5,6 and 7 are schematic cross sections of different embodiments of heat transfer tile according to the present invention.

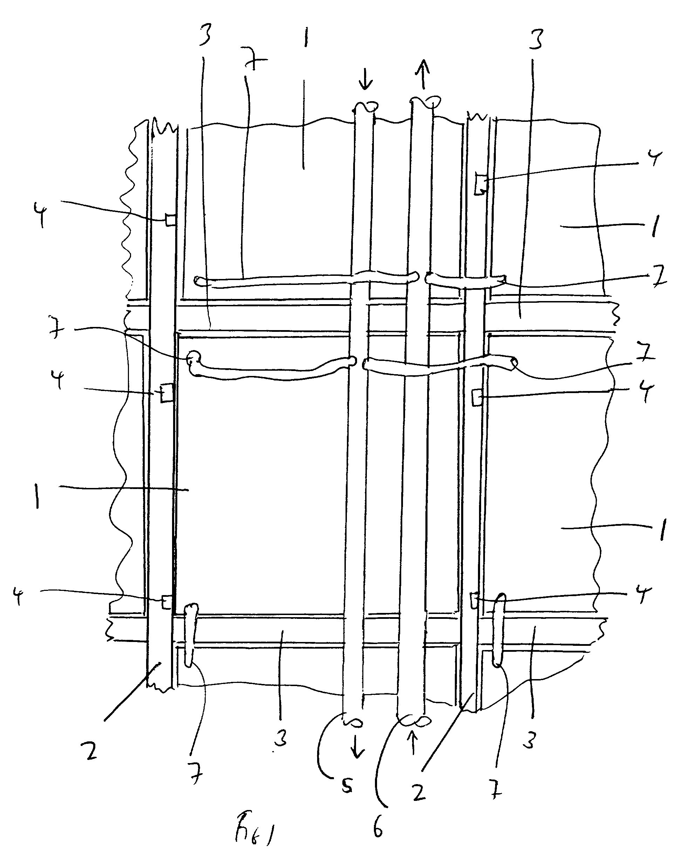

The ceiling illustrated in figure 1 has a plurality of tiles, indicated generally by the numeral 1 with the exterior files shown incompletely, in a grid composed of extruded aluminium runners 2 and cross pieces (noggins) 3. The grid is attached to the floor above by hangers 4. A header flow pipe 5 and a header outlet pipe 6 carry energy transfer fluid to and from the tiles 1. Braided flexible hoses tubes 7 connect the tiles 1 to the headers 5 and 6 and to each other.

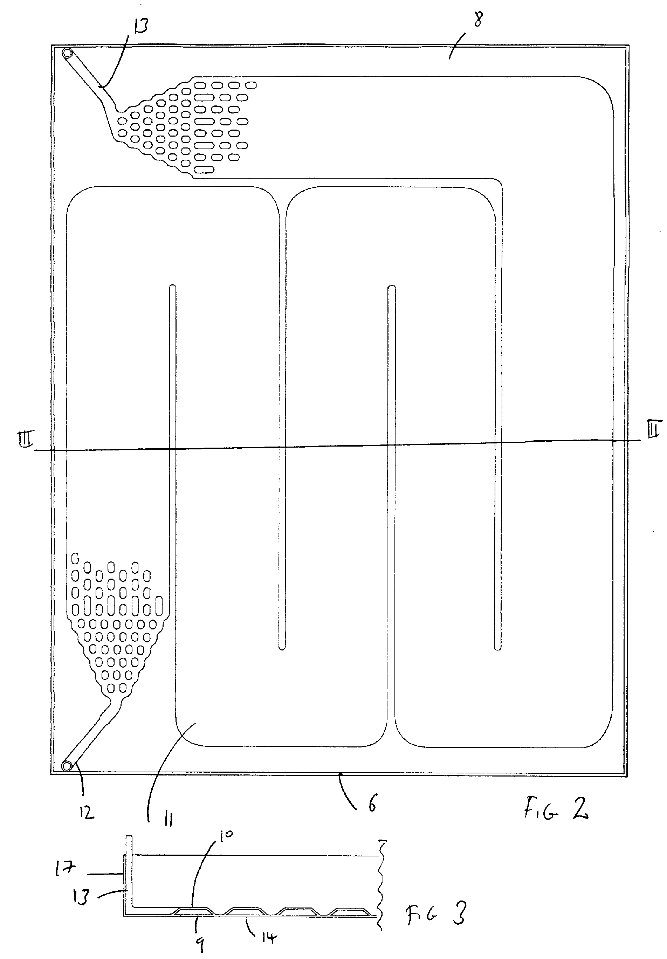

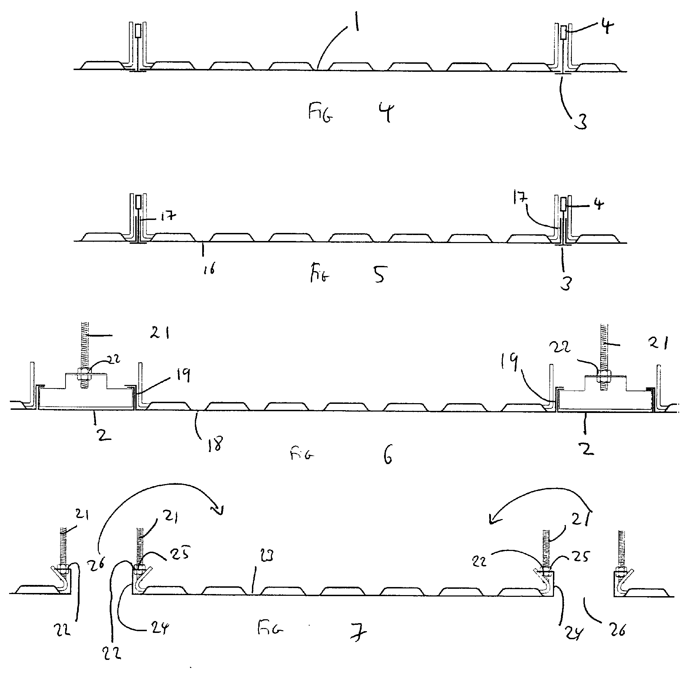

As shown in figure 2 and 3, each tile 1 comprises a channelled heat exchange member 8 The channelled member 8 comprises a flat lower plate 9 of aluminium fused to a shaped upper plate 10 also of aluminium. The configuration of the upper plate 10 creates between itself and the lower plate 9 a continuous channel 11 for the energy transfer fluid. The channel 11 comprises a common feed channel 12 at one side of the tile 1 and a common outlet channel 13 at the other side with a plurality of individual paths 11 between them across the width of the tile. 1. The continuous channel 11 is itself divided into a plurality of sub channels by a plurality of dimples formed in a pattern, as shown in the portions of the channel adjacent to the feed channels 12 and 13.

The feed channels 12 and 13 are suitably fixed to the channel 11 by welding or brazing.

The edges of the channel member have been bent upwards at right angles to form side wall portions of the tile which allow the tile to be fixed to the runners 2 and cross pieces 3, in a manner known in the art or as explained below.

The lower plate 9 provides, on its bottom surface, a surface 14 for facing into the room, which surface is in heat exchange relationship with the room. The lower surface 14 may be suitably finished for aesthetic reasons.

The illustrated version of channelled heat exchanger 8 was formed by the following procedure. The heat exchanger 8 is made from aluminium plates 9 and 10 both initially flat. Titanium-based ink is applied to plate 9 by silk screen printing in the pattern required for the channel 11. The plate 10 is then placed on top of the plate 9 to form a sandwich with the ink between them. The sandwich is heated to a high temperature 1000° C and pressure applied by rollers to the upper plate 10 fuse (bond) it to plate 9 except in the area of the applied ink pattern. In the pattern area, bonding of the plate 9 and 10 is prevented by the presence of the ink. The sandwich is placed between a solid base and a hard rubber upper plate and compressed air is fed into one end of the pattern area. The solid base prevents inflation of the plate 9 but the rubber plate permits inflation of the plate 10 under the action of the compressed air, resulting in the formation of the channel 11.

Figure 4 is a schematic drawing of a tile, suspended in a ceiling, in cross section. The tile 1 rests with its edges supported by cross pieces 3 attached to the floor above by hangers 4. The tile 1 is generally as illustrated in figure 2, except that it does not have the upturned edges 17.

In figure 5, a tile according to figure 2 is shown suspended from the ceiling. The tile 16 is formed with integrally formed upturned edges 17 to provide additional strength

Figure 6 shows a further design of tile 18, suspended from a ceiling by the aluminium runners 2 which are themselves suspended by suspending means 21. The tile 18 has integrally formed upturned edges 19 which are themselves provided with outwardly turned flanges 20 for resting on the tops of the aluminium runners 2. The suspending means comprise threaded bolts 21, to which the runners 2 are fixed by co-operating nuts 22.

In the embodiment shown in figure 7, the suspending means 21 of figure 6 is used. Each tile member 23 comprises integrally formed upwardly facing edges 24 with inwardly facing flanges 25, the inwardly facing flanges 25 having holes through which the bolts 21 pass. Co-operating nuts 22 are used to fix the tile members to the bolts 21. The suspending means 21 are arranged so that each suspending means 21 only suspends one tile and tiles are mounted with a gap 26 between them. Air can flow in the direction shown by the arrows through the gap 26 so that it contacts the top of the heat exchange tile 23, as well as the bottom.. In this way, a much higher heat exchange surface area can be provided.

The present invention has been described by way of example and modifications can be made within the invention.

## Claims

1. A heat transfer tile (1) for heating or cooling a room, which tile (1) comprises a heat exchange element comprising a channelled member (8) comprising a first plate (9) and a second plate (10) bonded to the first plate (9), wherein at least the second plate (10) is shaped, whereby the configuration of the shaped plate provides an elongate channel (11) between the plates (9, 10) for passage of an energy transfer fluid through the tile (1), **characterised in that** the first plate (9) comprises a surface for facing into the room.

2. A heat transfer tile as claimed in any preceding claim, in which the material forming the plates of the heat exchange element is aluminium with a thickness in the range of 0.4 to 5.0 mm.

3. A heat transfer tile as claimed in any preceding claim and intended for tiles used with refrigerant fluid, in which the elongated channel (11) includes a portion of narrow cross section and a portion of wider cross section.

4. A heat transfer tile as claimed in any preceding claim, further comprising thermal insulation material.

5. A heat transfer tile as claimed in claim 4, in which the insulation material is formed from mineral fibre having a thickness in the range of 10 to 20mm and a density in the region of 400 to 500 kg/m³

6. A heat transfer tile as claimed in claim 4 or 5, in which the insulation is held in place by mechanical means.

7. A ceiling for a room, comprising a structural ceiling member and a plurality of heat transfer tiles according to any preceding claim, suspended from the structural ceiling so that the heat transfer tiles define a substantially horizontally extending surface above the room, means being provided for supplying energy transfer fluid to each tile.
